# EUROPEAN PATENT SPECIFICATION

(11) **EP 2 834 009 B1**
(45) Date of publication and mention of the grant of the patent: **13.12.2017**
(21) Application number: 12715232.0
(22) Date of filing: 03.04.2012
(51) Int. Cl.: B03C 1/28, B01D 21/00, B01D 21/24

(54) **FLUID CIRCULATION SYSTEM FOR CIRCULATING AN AMOUNT OF FLUID COMPRISING A MAGNETIC SEPARATOR FOR SEPARATING SUSPENDED PARTICLES HAVING FERROMAGNETIC PROPERTIES, AND CORRESPONDING METHOD**
FLUIDZIRKULATIONSSYSTEM ZUR ZIRKULATION EINER FLÜSSIGKEITSMENGE MIT EINEM MAGNETISCHEN ABSCHEIDER ZUR ABSCHEIDUNG VON SUSPENDIERTEN TEILCHEN MIT FERROMAGNETISCHEN EIGENSCHAFTEN, UND ZUGEHÖRIGES VERFAHREN
SYSTÈME DE CIRCULATION DE FLUIDE POUR LA CIRCULATION D'UN VOLUME DE FLUIDE COMPRENANT UN SÉPARATEUR MAGNÉTIQUE DESTINÉ À SÉPARER DES PARTICULES EN SUSPENSION PRÉSENTANT DES PROPRIÉTÉS FERROMAGNÉTIQUES, ET PROCÉDÉ CORRESPONDANT

(43) Date of publication of application: 11.02.2015
(73) Proprietor: Spiro Enterprises B.V., 5845 EM Sint Anthonis (NL)
(72) Inventor: LAMERS, Antonius Gerardus Wilhelmus Maria, NL-5845 EM St. Anthonis (NL); VERHALLEN, Vincent Willem August, NL-5845 EM St. Anthonis (NL); SAHIN, Funda, NL-5845 EM St. Anthonis (NL)
(74) Representative: V.O.
(86) International application number: PCT/NL2012/050221
(87) International publication number: WO 2013/151415

(56) References cited:
- EP-A1- 1 445 024
- WO-A1-02/066166
- DE-C- 968 948
- DE-U1- 29 720 121
- FR-A1- 2 793 427
- US-A- 5 170 891

## Description

The invention relates to a fluid circulation system for circulating an amount of fluid, susceptible of containing suspended particles having ferromagnetic properties. More in particular the invention relates to a fluid circulation system for circulating an amount of fluid between heat exchangers, such as a heating or cooling system.

It is known to provide fluid circulation systems with a magnetic separator to collect ferromagnetic particles from a fluid flow that is susceptible to contain such particles in suspension. It has generally been difficult to remove the collected particles without recourse to substantial constructional effort and expense.

Accordingly it is an object of the present invention to propose an improved fluid circulation system for circulating an amount of fluid that is susceptible of containing suspended particles having ferromagnetic properties. In a more general sense it is thus an object of the invention to overcome or ameliorate at least one of the disadvantages of the prior art. It is also an object of the present invention to provide alternative structures which are less cumbersome in assembly and operation and which moreover can be made relatively inexpensively. Alternatively it is an object of the invention to at least provide the public with a useful choice.

To this end the invention provides a fluid circulation system for circulating an amount of fluid between heat exchangers, through a circulation circuit including: a collection chamber having an inlet for receiving a flow of fluid susceptible of containing suspended particles having ferromagnetic properties and an outlet for allowing the fluid to flow out of the collection chamber; a fluid flow path defined between the inlet and the outlet, including an interior of the collection chamber; a substantially tubular sleeve positioned in the fluid flow path interiorly of the collection chamber, the substantially tubular sleeve having a fluid tight interior; a magnet device accommodated within the fluid tight interior of the substantially tubular sleeve for creating a magnetic field on at least a first exterior portion of the substantially tubular sleeve; and means for selectively eliminating the magnetic field on the first exterior portion, wherein the means for selectively eliminating the magnetic field comprises an auxiliary sleeve of ferromagnetic material that can become positioned around the magnet device to short circuit the magnetic field. Such a circulation system is easier to purge from the collected particles, because the magnetic field can be more effectively removed thereby ensuring that no collected particles remain behind. It is noted that EP1445024A1 discloses a separator having a magnet, slidably housed in a sleeve inside a collection chamber. The magnet can be positioned in a first position for collecting particles having ferromagnetic properties, and can be moved to a second position axially spaced from the first position for releasing collected particles having ferromagnetic properties. DE968948C discloses a magnetic filter for removing ferromagnetic particles from a oil or some other fluid circulation system in which the magnetic field is interrupted by short circuiting by moving a bolt comprising a magnetic iron part and non-magnetic copper part relative to the magnets. DE29720121U1 discloses a separator having a magnet insertable in a sleeve inside a collection chamber. FR2793427A1 discloses a separator having a magnet, slidably housed in a sleeve inside a collection chamber. The magnet can be positioned in a first position for collecting particles having ferromagnetic properties, and can be moved to a second position axially spaced from the first position for releasing collected particles having ferromagnetic properties. These documents do not disclose an auxiliary sleeve of ferromagnetic material that can become positioned around the magnet device to short circuit the magnetic field for selectively eliminating the magnetic field. WO02/066166A1 discloses an apparatus for inducing magnetism in a flowstream of an at least partially magnetisable particulate feed material suspended in a liquid, the apparatus including a treatment chamber having an inlet and an outlet through which the flowstream respectively enters and exits the chamber; and a magnetic source able to be selectively activated with respect to the treatment chamber. The field of a permanent magnet can be shunted or blocked by moving a magnetic field barrier in between the permanent magnet and the vessel containing the magnetisable particulates.

WO02/06616A1 does not relate to fluid circulation systems for circulating an amount of fluid between heat exchangers through a circulation circuit. While it is possible to use an electrically energized magnet device, simplicity of the system is enhanced when the magnetic device includes at least one permanent magnet. Advantageously at least one of the at least one permanent magnet and the auxiliary sleeve may be movable between a first position in which the magnetic field is created at the first exterior portion and a second position in which the magnetic field is removed from the first exterior portion. Such movement may include relative rotation or relative translation. In this regard it is of further advantage when movement between the first and second positions, includes positioning of the at least one permanent magnet in selective positions along an axial extent of the substantially tubular sleeve. Preferably the at least one permanent magnet can have its North and South poles capped by a layer of ferromagnetic material, such as steel. The at least one permanent magnet can be a rare earth magnet, selected from a group of materials comprising neodymium, ceramic ferrous material, or samarium cobalt.

According to a preferred embodiment the at least one permanent magnet and the auxiliary sleeve of ferromagnetic material are arranged to be relatively movable with respect to one another. Advantageously the at least one permanent magnet and the substantially tubular sleeve are also arranged to be relatively movable with respect to one another. In this regard it is preferred when the auxiliary sleeve of ferromagnetic material is associated with the substantially tubular sleeve to coincide with the second position of the at least one permanent magnet. In particular this is advantageous when relative movement between the at least one permanent magnet and the substantially tubular sleeve is a translating movement and a preferred option is then to have the at least one permanent magnet slidably received in the fluid tight interior of the substantially tubular sleeve.

In an advantageous embodiment of the invention the substantially tubular sleeve is of a substantially non-magnetic material. At a portion coinciding with the second position the substantially tubular sleeve can have an enlarged diameter with respect to the remainder of the substantially tubular sleeve. The portion coinciding with the second position can be of conical shape. Thereby the gradually increasing diameter assists in moving the collected particles away from the magnet device.

The fluid circulation system according another embodiment of the invention can have the collection chamber provided with a discharge drain with an associated drain valve. Alternatively, the fluid circulation system can have an outlet valve associated with the outlet, the outlet valve preferably being of a type that is operable between a first position and a second position. Such an outlet valve associated with the outlet can be arranged for redirecting in its second position the fluid flowing out of the collection chamber from the circulation circuit to a discharge drain for removing collected particles from the collecting chamber. In this way circulation of the fluid can be interrupted to remove the particles from the collecting container, using one and the same valve.

In addition to arrangements for interrupting circulation and draining accumulated particles, it is also advantageous when an inlet valve is associated with the inlet, and the inlet valve being operable between at least a first position and a second position. The inlet valve in its second position may then be arranged to close the inlet of the collection chamber. Such a measure may limit the amount of fluid that is lost from the system during removal of the collected particles. In a further advantageous arrangement the inlet valve in its second position may allow the flow of fluid to bypass the collecting container. This has as result that fluid circulation need not be interrupted during flushing or purging of the collecting container. In this manner it also becomes possible to run a pair of two magnetic separators in parallel, so that also collection of ferromagnetic matter can continue in one separator during a draining cycle of another of the two magnetic separators. The inlet valve in its second position can also be arranged to allow a flushing fluid to flow into the collecting chamber. Using a separate flushing fluid also enables to substantially reduce losses of circulating fluid during periodic draining off collected particles. The flushing fluid can also be a gas.

When using valves for interrupting or redirecting circulation and draining accumulated particles, at least one of the inlet valve, the outlet valve, and the drain valve can also be arranged to be operated periodically by automatic control. Such a control can also be a programmable control device.

The at least one permanent magnet is advantageously adapted to be moved by a flexible member, such as a cable, on which a pulling force is applied. This has the added benefit that the cable that has one end attached to the at least one permanent magnet and an opposite end extending from the substantially tubular sleeve to an exterior of the collection chamber can with its end extending to the exterior of the collecting chamber be deflected in a direction at an angle with a direction of movement of the at least one permanent magnet, e.g. substantially perpendicular to the direction of movement of the at least one permanent magnet. Such a deflected cable, or other flexible member can substantially reduce the space requirements for the magnetic separator in a fluid circulation system according to the invention. Where in this specification reference is made to a cable, the skilled person will appreciate that any flexible member, including a cord, a chain, or strap can take the place of a cable. The at least one permanent magnet is advantageously spring biased into one of its first and second positions. This requires an operating force, such as a pulling force to the cable, only to be applied for either draining or collecting. This may also provide a fail safe feature by which in default of operation the system is always set to collect or to drain particles, as the case may be.

Generally the fluid circulation system may be configured as a heating or cooling system.

Further advantageous aspects of the invention will become clear from the appended description and in reference to the accompanying drawings, in which:
Figure 1 is a schematic cross section of a portion of a fluid circulation system according to a first embodiment of the invention;
Figure 2 is a schematic cross section as in Figure 1, but showing the system in a second position of operation;
Figure 3 schematically shows a first principle of short circuiting the magnetic field of a permanent magnet;
Figure 4 shows a modified permanent magnet;
Figure 5 shows a principle of short circuiting the magnetic field of the modified permanent magnet;
Figure 6 schematically shows a second embodiment of the invention in a first position of operation;
Figure 7 shows the second embodiment of Figure 6 in a second position of operation;
Figure 8 is a cross section showing a third embodiment.

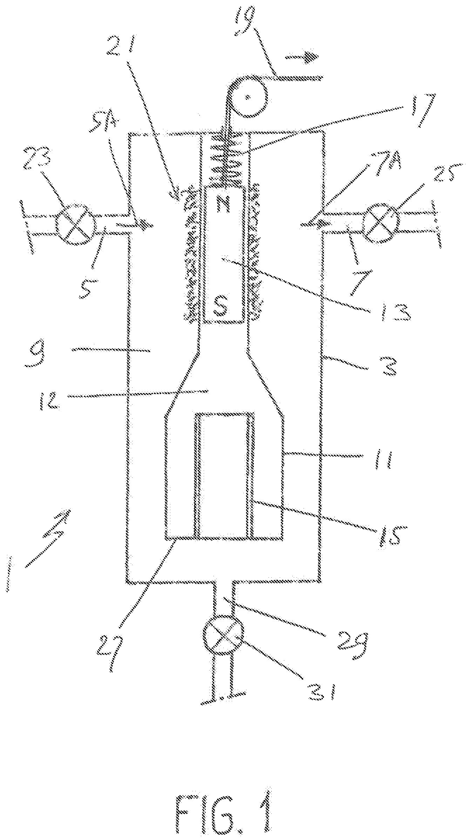

In Figure 1 a magnetic separator 1 is shown schematically. The magnetic separator 1 is part of a fluid circulation system for circulating an amount of fluid between heat exchangers. The fluid circulation system, in as far as it is conventional, has been omitted from Figure 1 for clarity. The amount of fluid that is in circulation between the heat exchangers, such as a heating or cooling system, enters a collection chamber 3 through an inlet 5 and leaves the collection chamber 3 through an outlet 7. The fluid flow path is indicated by arrows 5A and 7A. The inflow of fluid through inlet 5 is a flow of fluid that is susceptible of containing suspended particles that have ferromagnetic properties. Such particles are often found in heating systems and may have originated from wear of parts, such as pumps and valves within the fluid circulation system. The collection chamber 3 has a hollow interior 9 that is normally filled with the fluid that is in circulation. Also exposed to the fluid in circulation is a substantially tubular sleeve 11 that is accommodated within the hollow interior 9 of collection chamber 3. Contained for translating movement in the substantially tubular sleeve 11 is a magnet device 13. In Figure 1 the magnet device 13 has it's North pole N and south pole S aligned with a direction of movement of the magnet device 13. The tubular sleeve 11 is of substantially non-ferromagnetic material, so that in the position shown in Figure 1 the magnet device 13 has its magnetic field extending to the exterior of an upper portion of the tubular sleeve 11. Also positioned within the interior 12 of the substantially tubular sleeve 11 is an auxiliary sleeve 15 of ferromagnetic material. The interior 12 of the tubular sleeve 11 is fluid tight, so that the circulating fluid has no access to the magnet device 13. The magnet device 13 as shown in Figure 1 is kept in its position in the upper portion of the sleeve 11 against the action of a compression spring 17 by means of a cable 19. With the magnet device 13 in its upper position, ferromagnetic debris 21 when present in the flow of fluid passing the collection chamber 3 will be intercepted and retained by the magnetic field created around the magnet device 13. As the circulating fluid will pass continuously past the magnetic field around the tubular sleeve 11 all ferromagnetic matter will eventually be captured by the magnetic separator 1. Optionally the magnetic separator 1 may also be provided with an inlet valve 23 associated with fluid inlet 5 and an outlet valve 25 associated with the fluid outlet 7. Further the sleeve 11 may be closed by a bottom 27 to ensure its fluid tightness independent of the collection chamber 3. The collection chamber 3 may optionally also be provided with a discharge drain 29, which may have an associated drain valve 31.

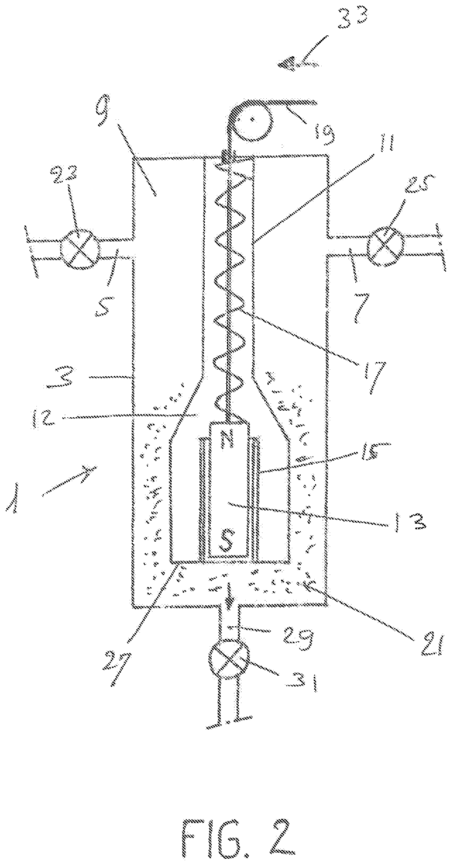

Referring now to Figure 2, the magnetic separator is shown with its magnet device 13 positioned at a lower portion of the sleeve 11, in which its magnetic field is eliminated (or at least diminished) by the auxiliary sleeve 15 of ferromagnetic material that forms a short circuit for the magnetic field. The elimination or diminishing of the magnetic field allows the collected ferromagnetic debris particles to be extracted from the collection chamber 3. The magnet device 13 has been brought into the position illustrated in Figure 2 by allowing the compression spring 17 to release and the cable 19 to move in the direction of arrow 33. In Figure 2 the lower end of the substantially tubular sleeve 11 also has an enlarge diameter. The enlarged lower sleeve diameter further reduces the magnetic field strength experienced by the collected ferromagnetic debris particles 21, allowing them to be extracted from the collection chamber 3 because there is no magnetic field strong enough to retain them. It will be appreciated that when thus the magnetic field is not capable of holding the collected ferromagnetic debris particles 21, the ferromagnetic debris particles can sink to the bottom of the collection chamber 3 due to gravity. For draining the collected ferromagnetic debris particles 21 from the collection chamber 3 it then may suffice to open the drain valve 31 (during normal circulation of the circulating fluid) for flushing the collected particles 21 through the discharge drain 29. It will be clear that some of the circulating fluid will be discharged together with the particles 21. It will be appreciated that it is also possible to halt the circulation of the circulating fluid prior to opening of the discharge drain 29.

In order to reduce the amount of circulating fluid discharged, the inlet and outlet valves 23, 25 may be closed and a portion of the circulating fluid may be allowed to be drained off through the discharge drain 29 when the drain valve 31 is opened. This purging of magnetically collected contaminations needs only to be performed periodically and at relatively large time intervals. To ensure proper draining and preventing the entrance of air, the closing of the outlet valve 25 may be timed to precede the closing of the inlet valve 23 in an amount sufficient to ensure replenishment of the interior 9 of the collection chamber 3. Preferably the operation of the various valves is entrusted to an automatic control device which may be triggered by programmable software. In an alternative arrangement the inlet and outlet valves 23, 25 may also be arranged to bypass the magnetic separator when the purging process is being carried out. It is also possible to use a separate flushing fluid to carry the collected particles from the collecting chamber 5 to the discharge drain 29.

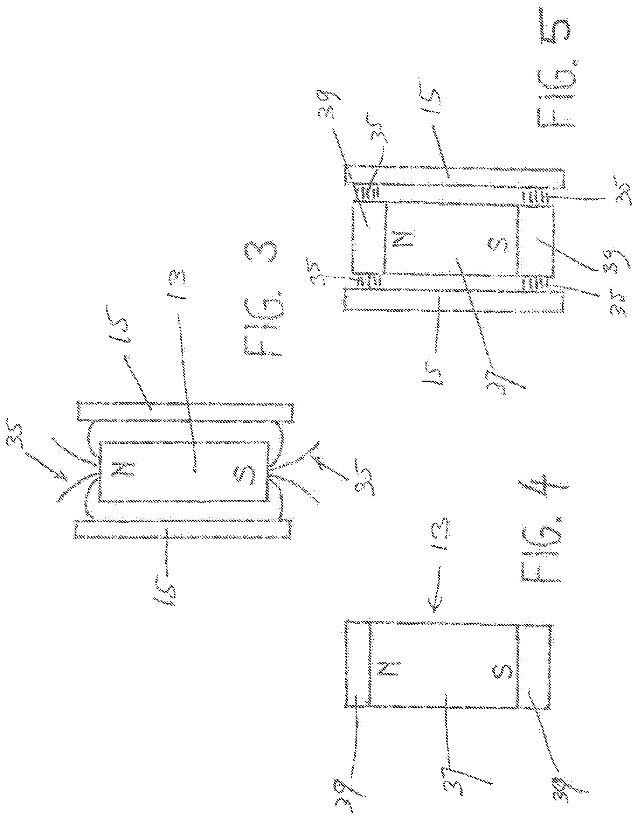

Referring now to Figure 3 the magnet device 13 is shown between the walls of auxiliary sleeve 15. The magnet device 13 may suitably be a permanent magnet of, e.g. sintered, rare earth materials, ferrite, alnico, neodymium or samarium cobalt, and/or magnets generally referred to as ceramic magnets. One particularity of magnets is that the magnetic field lines 35 at the opposite North and South poles N, S extend in an axial direction, from which these are gradually deflected radially outwardly. By capping the North and South poles of a magnet 37, by caps 39 of ferromagnetic material such as iron or steel, the field lines 35 can be deflected in a radial direction at a shorter distance, as shown in Figure 4 and 5. Such ferromagnetic caps 39 not only improve the short cutting effect of the auxiliary sleeve 15, but also ensure an improved attraction of particles suspended n the circulating fluid, when the magnet device 13 is in its first position shown in Figure 1.

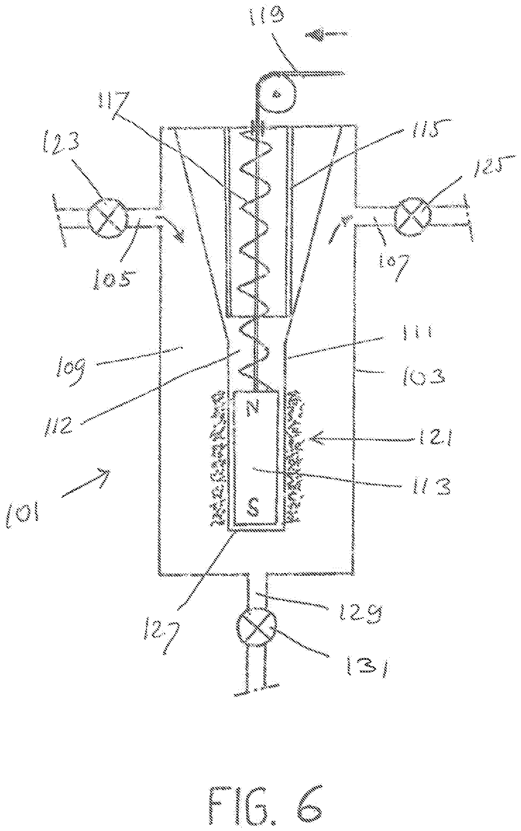

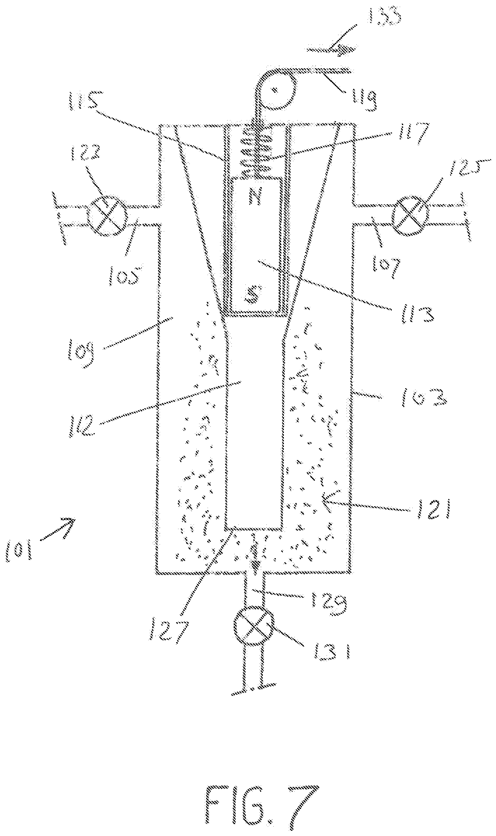

In Figures 6 and 7 an alternative embodiment of the magnetic separator of Figures 1 and 2 is shown. Reference numerals of like parts will be referred to with the addition of 100. Hence, magnetic separator 101 is also provided with a collection chamber 103 that has an inlet 105 and an outlet 107A. Within the hollow interior 109 a substantially tubular and fluid tight sleeve 111 is positioned within the flow path between the inlet 105 and the outlet 107. A magnet device 113 of the kind described with respect to Figures 1-5 is again accommodated within the substantially tubular sleeve 111 for translatory movement therein. The magnet device 113 can be lifted upwardly within an auxiliary sleeve 115 of ferromagnetic material against the action of a compression spring 117. The compression spring 117 in the second embodiment biases the magnet device 113 into its operative position when the cable 119 is not pulled in the direction of arrow 133 as shown in Figure 7. An upper end of the substantially tubular sleeve 111 has a frustoconical shape with an upwardly increasing diameter. In its lowermost position the magnet device 113 attracts ferromagnetical particles that are in suspension in the circulating fluid. The substantially tubular sleeve 111 is of a non-magnetic material, so that the magnetic flux lines of the magnet device 113 extend to the exterior of the tubular sleeve 111, which closely surrounds the magnet device 113. As shown in Figure 6, the ferromagnetic particles 121 are collected around the lower part of the tubular sleeve 111. When the magnet device 113 is retracted against compression spring 117 in its upper most position as shown in Figure 7 the collected particles are no longer under the influence of a magnetic field and can be drained through a discharge drain 129. In this situation an outlet valve 125 will first have closed the outlet 107 so that the collected debris cannot continue in the fluid circulation system. Rinsing of the high concentration of debris 121 in the collection chamber 3 can be done by the circulation fluid by continuing allowing the fluid to enter through inlet 105. However a certain amount of fluid will be lost from the system through the discharge drain 129 for as long as the drain valve 131 is kept open and the outlet valve 125 closed. It may therefore be preferred to provide a bypass for the circulating fluid and execute the inlet valve 123 as a selector valve that redirects the circulating fluid into a bypass and at the same time connect to a rinsing fluid that is allowed to enter the collection chamber 3 through the same inlet 105. Clearly it is also possible to provide a separate inlet and inlet valve for a rinsing fluid, but this would generally complicate the construction more than is necessary. Operation of the various valves and operation of the pull cable 119 may be carried out with automatic control means of predetermined intervals.

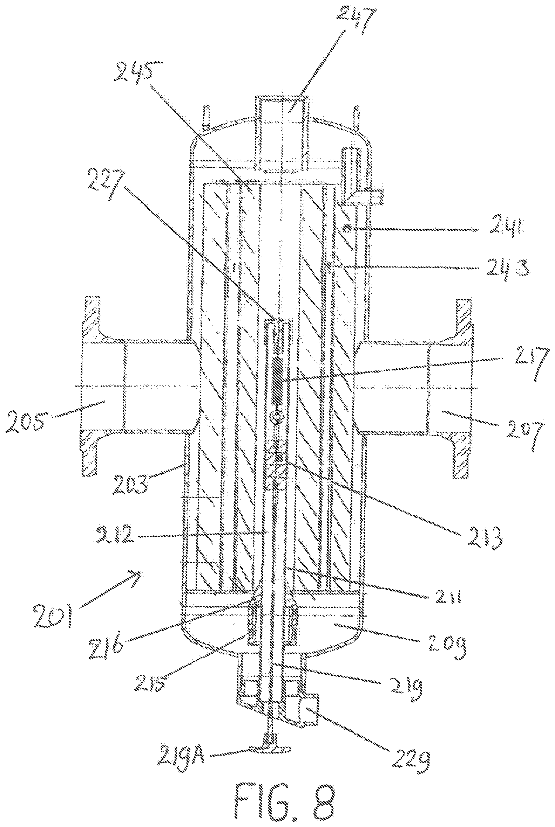

A third embodiment of the invention in the form of a combined de-aerator and particle separator 201 is shown in cross section in Figure 8. Reference numerals of parts corresponding with parts in the previous Figures will be referred to with the addition of 200 with respect to Figures 1-5. This combined de-aerator and particle separator 201 has a collection chamber 203 and a fluid inlet 205, as well as a fluid outlet 207 that do not require any inlet and outlet valves. With the embodiment of Figure 8 ferromagnetic dirt particles can be discharged from the system while the system is in operation. Since discharging of the collected particles can be performed in a very short time, it is not necessary to shut down or bypass the fluid circulation. In particular this option has been made possible because the accumulated particles are collected outside the main flow. To this end a tubular sleeve 211 only extends from the level of the inlet 205 and outlet 207 downwardly. An upper end of the tubular sleeve 211 is closed in a fluid tight manner by an end plug 227. Attached to the end plug 227 in an interior 212 of the tubular sleeve 211 is a tension spring 217, which has an opposite end thereof connected to a sliding magnet device 213. An opposite end of the sliding magnet device 213, which is guided in the non-ferromagnetic tubular sleeve 211, has a cable 219 attached thereto. As mentioned before, the cable 219, may be replaced by another flexible element, such as chain having pivotally interconnected chain links. The cable 219 is guided from the fluid tight interior 212 of the tubular sleeve 211 to an exterior of the magnetic separator 201. The exterior part of the cable 219 in this example is provided with a handle 219A for manual actuation. If required the cable 219 may also connect to a mechanical device for automatic operation. With the cable 219 in an non-operated position, as shown in Figure 8, the spring 217 is relaxed and biases the position of the magnet device 213 to a position just below the level of the inlet 205 and outlet 207. In this position the ferro magnetic dirt particles are collected outside the main flow of the circulating fluid. An auxiliary sleeve 215 in this example is positioned concentrically around the tubular sleeve 211, to an exterior thereof. An enlarged diameter portion is provided on a lower portion of the tubular sleeve 211, in the form of a collar 216. The collar 216, which has a conical upper portion and a cavity for the auxiliary sleeve 215 in its bottom portion, can be clamped onto the exterior of the tubular sleeve 211. In such a case the collar may be in a non-magnetic plastic material. When the collar 216 is in a non-magnetic metal, it may also be brazed or soldered to the exterior of the tubular sleeve 211. In the example of Figure 8 the tubular sleeve 211 also extends below the auxiliary sleeve 215 in a region closely adjacent to a discharge drain 229. The discharge drain, as in the previous examples, may be associated with a drain valve (not shown, but conventional).

In this example, the magnet device 213 can be moved to a lowermost position below the auxiliary sleeve 215 in close proximity to the discharge drain 229. Prior to opening of the discharge drain 229, the magnet device 213 can be moved from a position within the auxiliary sleeve 215, where its magnetic force is eliminated and the particles are released, to a position in the tubular sleeve 211 below the auxiliary sleeve 215. In this position below the auxiliary sleeve 215, the magnet device 213 becomes again effective in catching the suspended concentration of previously collected particles on a portion of the tubular sleeve 211 that is directly adjacent to the discharge drain 229. When the magnet device 213 is allowed to return to its uppermost position prior to or substantially simultaneously with opening of the discharge drain 229, then the collected particles will be retained by the bottom of the collar 216 and be drained off upon opening of the discharge drain 229. Fluid losses will be minimal and the fluid circulation can be continued without risk of the collected particles escaping through the outlet 207 where the fluid flow velocity is much higher than at the lower portion of the hollow interior 209 of the collection chamber 203.

A further aspect of the de-aerator and particle separator 201 of the embodiment of Figure 8 is that it also includes a de-aerator that in a known manner includes an array of so-called spirotubes 241, of which in this example six are arranged about the perimeter of the tubular sleeve 211. These spirotubes 241 comprise a core tube 243, surrounded by a coil of wire 245. The construction of these spirotubes 241 is generally as described in patent documents GB 1, 579, 516, US 4,655,282, US 3, 854, 906, US 4,027,691 or US 4, 381, 928 and reference can be had to these documents for further details. For the present invention it suffices to mention that these spirotubes 241 promote the separation of air and (non-magnetic) dirt particles from the fluid and offer only minimal flow resistance. While these spirotubes 241 can trap the smallest micro bubbles of air, it also has a very open structure, so that it cannot clog up with dirt particles. The trapped air bubbles may be drained off through an air vent opening 247 in the uppermost portion of the collecting chamber 203. The air vent opening 247 will be provided with a conventional air bleed valve, which for clarity is omitted in Figure 8. The core tube 243 of each spirotube 241 can be made from a magnetisable material, such as steel or iron. Then, the spirotube acts as a magnetisable insert which further assists in spreading and amplifying the magnetic field of the magnet device 213.

Thus is described a fluid circulation system for circulating an amount of fluid, susceptible of containing suspended particles (21; 121) having ferromagnetic properties, between heat exchangers that is provided with a magnetic separator 1; 101; 201. The magnetic separator 1; 101; 201 includes a collection chamber 3; 103; 203 having an inlet 5; 105; 205 for receiving the flow of fluid and an outlet 7; 107; 207 for allowing the fluid to flow out of the collection chamber. A fluid flow path is defined between the inlet 5; 105; 205 and the outlet 7; 107; 207, including an interior 9; 109; 209 of the collection chamber 3; 103; 203. A substantially tubular sleeve 11; 111; 211 is positioned in the fluid flow path interiorly of the collection chamber 3; 103; 203 and has a fluid tight interior 12; 112; 212. A magnet device 12; 113; 213 is accommodated within the fluid tight interior 12; 112; 212 of the substantially tubular sleeve 11; 111; 211 for creating a magnetic field on at least a first exterior portion of the substantially tubular sleeve 11; 111; 211. Means 15, 19; 115, 119; 215, 219 are included in the magnetic separator 1; 101; 201 for selectively eliminating the magnetic field on the first exterior portion. The means for selectively eliminating the magnetic field 15, 19; 115, 119; 215, 219 comprise an auxiliary sleeve 15; 115; 215 of ferromagnetic material that can become interposed between the magnet device 13; 113; 213 and the substantially tubular sleeve 11; 111; 211 to short circuit the magnetic field.

It is thus believed that the operation and construction of the present invention will be apparent from the foregoing description and drawings appended thereto. It will be clear to the skilled person that the invention is not limited to any embodiment herein described and that modifications are possible. Also kinematic inversions are considered inherently disclosed and to be within the scope of the invention. In the claims, any reference signs shall not be construed as limiting the claim. The term 'comprising' and 'including' when used in this description or the appended claims should not be construed in an exclusive or exhaustive sense but rather in an inclusive sense. Thus the expression 'comprising' as used herein does not exclude the presence of other elements or steps in addition to those listed in any claim. Furthermore, the words 'a' and 'an' shall not be construed as limited to 'only one', but instead are used to mean 'at least one', and do not exclude a plurality. Features that are not specifically or explicitly described or claimed may be additionally included in the structure of the invention within its scope. Expressions such as: "means for ..." should be read as: "component configured for ..." or "member constructed to ..." and should be construed to include equivalents for the structures disclosed. The use of expressions like: "critical", "preferred", "especially preferred" etc. is not intended to limit the invention. Additions, deletions, and modifications within the purview of the skilled person may generally be made without departing from the scope of the invention, as is determined by the claims.

## Claims

1. Fluid circulation system for circulating an amount of fluid between heat exchangers through a circulation circuit, the fluid circulation system comprising a magnetic separator (1, 101, 201) including:
a collection chamber (3, 103, 203) having an inlet (5, 105, 205) for receiving a flow of fluid susceptible of containing suspended particles having ferromagnetic properties and an outlet (7, 107, 207) for allowing the fluid to flow out of the collection chamber;
a fluid flow path defined between the inlet and the outlet, including an interior (9, 109, 209) of the collection chamber;
a substantially tubular sleeve (11, 111, 211) positioned in the fluid flow path interiorly of the collection chamber, the substantially tubular sleeve having a fluid tight interior (12, 112, 212) ; a magnet device (13, 113, 213) accommodated within the fluid tight interior of the substantially tubular sleeve for creating a magnetic field on at least a first exterior portion of the substantially tubular sleeve; and
means for selectively eliminating the magnetic field on the first exterior portion, **characterized in that** the means for selectively eliminating the magnetic field comprises an auxiliary sleeve (15, 115, 215) of ferromagnetic material that can become positioned around the magnet device to short circuit the magnetic field.

2. Fluid circulation system according to claim 1, wherein the magnetic device (13, 113, 213) includes at least one permanent magnet.

3. Fluid circulation system according to claim 2, wherein at least one of the at least one permanent magnet (13, 113, 213) and the auxiliary sleeve (15, 115, 215) is movable, for instance axially, between a first position in which the magnetic field is created at the first exterior portion and a second position in which the magnetic field is removed from the first exterior portion.

4. Fluid circulation system according to claim 3, wherein the at least one permanent magnet has its North and South poles capped by a layer of ferromagnetic material (39).

5. Fluid circulation system according to any one of claims 3 to 4, wherein the at least one permanent magnet and the substantially tubular sleeve are arranged to be relatively movable with respect to one another.

6. Fluid circulation system according to any one of claims 1 to 5, wherein the substantially tubular sleeve at a portion coinciding with the second position has an enlarged diameter with respect to the remainder of the substantially tubular sleeve.

7. Fluid circulation system according to claim 6, wherein the portion coinciding with the second position is of conical shape having a gradually increasing diameter.

8. Fluid circulation system according to claim 7, wherein the at least one permanent magnet is positionable in a third position beyond the end of the conical shape having the largest diameter.

9. Fluid circulation system according to claims 1-8, wherein the at least one permanent magnet can be positioned in the first position for collecting the suspended particles having ferromagnetic properties, and in the second position for allowing said particles to be released.

10. Fluid circulation system according to any one of claims 2 to 9, wherein the at least one permanent magnet is adapted to be moved by a flexible member (19, 119, 219), such as a cable, on which a pulling force is applied.

11. Fluid circulation system according to any one of claims 3 to 10, wherein the at least one permanent magnet is spring biased into one of the first and second positions.

12. Fluid circulation system according to any one of claims 1 to 11, wherein the fluid circulation system is a heating system and/or a cooling system.

13. Method for separating suspended particles having ferromagnetic properties from a fluid circulating between heat exchangers in a fluid circulation system using a magnetic separator (1, 101, 201), the method including:
providing a collection chamber (3, 103, 203) having an inlet (5, 105, 205) for receiving a flow of fluid susceptible of containing suspended particles having ferromagnetic properties and an outlet (7, 107, 207) for allowing the fluid to flow out of the collection chamber, a fluid flow path being defined between the inlet and the outlet and including an interior (9, 109, 209) of the collection chamber;
providing a substantially tubular sleeve (11, 111, 211) positioned in the fluid flow path interiorly of the collection chamber, the substantially tubular sleeve having a fluid tight interior (12, 112, 212); providing a magnet device (13, 113, 213) accommodated within the fluid tight interior of the substantially tubular sleeve for creating a magnetic field on at least a first exterior portion of the substantially tubular sleeve;
providing means for selectively eliminating the magnetic field on the first exterior portion, **characterized in that**
the means for selectively eliminating the magnetic field comprising an auxiliary sleeve (15, 115, 215) of ferromagnetic material; and the method includes selectively positioning the magnet device and the auxiliary sleeve in a first relative position in which the magnetic field is created at the first exterior portion for collecting suspended particles having ferromagnetic properties and a second relative position in which the magnetic field is removed from the first exterior portion for releasing said particles.

14. Method according to claim 13, wherein in the second relative position the auxiliary sleeve (15, 115, 215) is positioned around the magnet device to short circuit the magnetic field.

15. Method according to claim 13 or 14, including moving the magnet device (13, 113, 213) and/or the auxiliary sleeve (15, 115, 215) between the first and second relative positions.

16. Method according to any one of claims 13-15, wherein the portion coinciding with the second position is of conical shape having a gradually increasing diameter, and including positioning the magnet device in a third position beyond the end of the conical shape having the largest diameter for recollecting said particles at the position beyond the end of the conical shape having the largest diameter, and subsequently positioning the magnet device in the first or second relative position for allowing said particles to be released so as to be discharged.

## Patentansprüche

1. Fluidzirkulationssystem zur Zirkulation einer Flüssigkeitsmenge zwischen Wärmetauschern durch einen Zirkulationskreislauf, das Fluidzirkulationssystem umfassend einen magnetischen Abscheider (1, 101, 201), umfassend:
eine Sammelkammer (3, 103, 203) mit einem Einlass (5, 105, 205) zum Empfangen eines Flusses von Flüssigkeit, die anfällig dafür ist, suspendierte Teilchen mit ferromagnetischen Eigenschaften zu enthalten, und einen Auslass (7, 107, 207), damit die Flüssigkeit aus der Sammelkammer fließen kann;
einen Flüssigkeitsfließweg, definiert zwischen dem Einlass und dem Auslass, umfassend ein Inneres (9, 109, 209) der Sammelkammer;
eine im Wesentlichen röhrenförmige Muffe (11, 111, 211), positioniert in dem Flüssigkeitsfließweg innen in der Sammelkammer, welche im Wesentlichen röhrenförmige Muffe ein flüssigkeitsdichtes Inneres (12, 112, 212) hat;
eine Magnetvorrichtung (13, 113, 213), aufgenommen in dem flüssigkeitsdichten Inneren der im Wesentlichen röhrenförmigen Muffe, um auf mindestens einem ersten äußeren Abschnitt der im Wesentlichen röhrenförmigen Muffe ein Magnetfeld zu schaffen; und
Mittel zum selektiven Beseitigen des Magnetfeldes auf dem ersten äußeren Abschnitt, **dadurch gekennzeichnet, dass**
das Mittel zum selektiven Beseitigen des Magnetfeldes eine Hilfsmuffe (15, 115, 215) aus ferromagnetischem Material umfasst, das um die Magnetvorrichtung herum positioniert werden kann, um das Magnetfeld kurzzuschließen.

2. Fluidzirkulationssystem nach Anspruch 1, wobei die Magnetvorrichtung (13, 113, 213) mindestens einen Dauermagneten umfasst.

3. Fluidzirkulationssystem nach Anspruch 2, wobei mindestens einer des mindestens einen Dauermagneten (13, 113, 213) und die Hilfsmuffe (15, 115, 215) beweglich sind, beispielsweise axial, zwischen einer ersten Position, in welcher das Magnetfeld an dem ersten äußeren Abschnitt geschaffen wird, und einer zweiten Position, in welcher das Magnetfeld von dem ersten äußeren Abschnitt beseitigt wird.

4. Fluidzirkulationssystem nach Anspruch 3, wobei die Nord- und Südpole des mindestens einen Dauermagneten von einer Schicht aus ferromagnetischem Material (39) bedeckt sind.

5. Fluidzirkulationssystem nach einem der Ansprüche 3 bis 4, wobei der mindestens eine Dauermagnet und die im Wesentlichen röhrenförmige Muffe angeordnet sind, um zueinander relativ beweglich zu sein.

6. Fluidzirkulationssystem nach einem der Ansprüche 1 bis 5, wobei die im Wesentlichen röhrenförmige Muffe an einem Abschnitt, der deckungsgleich mit der zweiten Position ist, einen vergrößerten Durchmesser in Bezug auf den Rest der im Wesentlichen röhrenförmigen Muffe hat.

7. Fluidzirkulationssystem nach Anspruch 6, wobei der mit der zweiten Position deckungsgleiche Abschnitt konusförmig mit einem allmählich zunehmenden Durchmesser ist.

8. Fluidzirkulationssystem nach Anspruch 7, wobei der mindestens eine Dauermagnet in einer dritten Position über dem Ende der Konusform mit dem größten Durchmesser hinaus positionierbar ist.

9. Fluidzirkulationssystem nach den Ansprüchen 1-8, wobei der mindestens eine Dauermagnet in der ersten Position positioniert werden kann, um die suspendierten Teilchen mit ferromagnetischen Eigenschaften zu sammeln, und in der zweiten Position, um es den Teilchen zu ermöglichen, freigegeben zu werden.

10. Fluidzirkulationssystem nach einem der Ansprüche 2 bis 9, wobei der mindestens eine Dauermagnet angepasst ist, um von einem flexiblen Element (19, 119, 219), wie etwa einem Kabel, auf das eine Zugkraft angewendet wird, bewegt zu werden.

11. Fluidzirkulationssystem nach einem der Ansprüche 3 bis 10, wobei der mindestens eine Dauermagnet in einer der ersten und zweiten Positionen federbelastet ist.

12. Fluidzirkulationssystem nach einem der Ansprüche 1 bis 11, wobei das Fluidzirkulationssystem ein Heizsystem und/oder ein Kühlsystem ist.

13. Verfahren zum Trennen suspendierter Teilchen mit ferromagnetischen Eigenschaften von einer Flüssigkeit, die zwischen Wärmetauschern in einem Fluidzirkulationssystem unter Verwendung eines magnetischen Abscheiders (1, 101, 201) zirkuliert, das Verfahren umfassend:
das Bereitstellen einer Sammelkammer (3, 103, 203) mit einem Einlass (5, 105, 205) zum Empfangen eines Flusses von Flüssigkeit, die anfällig dafür ist, suspendierte Teilchen mit ferromagnetischen Eigenschaften zu enthalten, und einem Auslass (7, 107, 207), damit die Flüssigkeit aus der Sammelkammer fließen kann, wobei ein Flüssigkeitsfließweg zwischen dem Einlass und dem Auslass definiert ist und ein Inneres (9, 109, 209) der Sammelkammer umfasst;
das Bereitstellen einer im Wesentlichen röhrenförmigen Muffe (11, 111, 211), positioniert in dem Flüssigkeitsfließweg innen in der Sammelkammer, welche im Wesentlichen röhrenförmige Muffe ein flüssigkeitsdichtes Inneres (12, 112, 212) hat;
das Bereitstellen einer Magnetvorrichtung (13, 113, 213), aufgenommen in dem flüssigkeitsdichten Inneren der im Wesentlichen röhrenförmigen Muffe, um auf mindestens einem ersten äußeren Abschnitt der im Wesentlichen röhrenförmigen Muffe ein Magnetfeld zu schaffen;
das Bereitstellen von Mitteln zum selektiven Beseitigen des Magnetfeldes auf dem ersten äußeren Abschnitt, **dadurch gekennzeichnet, dass**
die Mittel zum selektiven Beseitigen des Magnetfeldes eine Hilfsmuffe (15, 115, 215) aus ferromagnetischem Material umfassen; und
das Verfahren das selektive Positionieren der Magnetvorrichtung und der Hilfsmuffe in einer ersten relativen Position, in welcher das Magnetfeld an dem ersten äußeren Abschnitt zum Sammeln suspendierter Teilchen mit ferromagnetischen Eigenschaften geschaffen wird, und einer zweiten relativen Position, in welcher das Magnetfeld von dem ersten äußeren Abschnitt entfernt wird, um die Teilchen freizugeben, umfasst.

14. Verfahren nach Anspruch 13, wobei in der zweiten relativen Position die Hilfsmuffe (15, 115, 215) um die Magnetvorrichtung herum positioniert ist, um das Magnetfeld kurzzuschließen.

15. Verfahren nach Anspruch 13 oder 14, umfassend das Bewegen der Magnetvorrichtung (13, 113, 213) und/oder der Hilfsmuffe (15, 115, 215) zwischen den ersten und zweiten relativen Positionen.

16. Verfahren nach einem der Ansprüche 13-15, wobei der Abschnitt, der deckungsgleich mit der zweiten Position ist, konusförmig mit einem allmählich zunehmenden Durchmesser ist, und umfassend das Positionieren der Magnetvorrichtung in einer dritten Position über dem Ende der Konusform mit dem größten Durchmesser hinaus, um die Teilchen an der Position über dem Ende der Konusform mit dem größten Durchmesser hinaus wieder zu sammeln, und anschließend das Positionieren der Magnetvorrichtung in der ersten oder zweiten relativen Position, um das Freigeben der Teilchen zu ermöglichen, damit sie abgeführt werden können.

## Revendications

1. Système de circulation de fluide pour la circulation d'une quantité de fluide entre des échangeurs thermiques à travers un circuit de circulation, le système de circulation de fluide comprenant un séparateur magnétique (1, 101, 201) comprenant :
une chambre de collecte (3, 103, 203) comprenant une entrée (5, 105, 205) pour la réception d'un écoulement de fluide susceptible de contenir des particules suspendues ayant des propriétés ferromagnétiques et une sortie (7, 107, 207) permettant au fluide de s'écouler hors de la chambre de collecte ;
un trajet d'écoulement de fluide défini entre l'entrée et la sortie, comprenant un intérieur (9, 109, 209) de la chambre de collecte ;
un manchon sensiblement tubulaire (11, 111, 211) positionné dans le trajet d'écoulement de fluide à l'intérieur de la chambre de collecte, le manchon sensiblement tubulaire comprenant un intérieur étanche au fluide (12, 112, 212) ;
un dispositif à aimant (13, 113, 213) logé dans l'intérieur étanche au fluide du manchon sensiblement tubulaire pour créer un champ magnétique sur au moins une première portion extérieure du manchon sensiblement tubulaire ; et
un moyen pour l'élimination sélective du champ magnétique sur la première position extérieure, **caractérisé en ce que**
le moyen pour l'élimination sélective du champ magnétique comprend un manchon auxiliaire (15, 115, 215) constitué d'un matériau ferromagnétique qui peut être positionné autour du dispositif à aimant pour court-circuiter le champ magnétique.

2. Système de circulation de fluide selon la revendication 1, dans lequel le dispositif magnétique (13, 113, 213) comprend au moins un aimant permanent.

3. Système de circulation de fluide selon la revendication 2, dans lequel au moins un de l'au moins un aimant permanent (13, 113, 213) et du manchon auxiliaire (15, 115, 215) est mobile, par exemple axialement, entre une première position dans laquelle le champ magnétique est généré au niveau de la première portion extérieure et une deuxième position dans laquelle le champ magnétique est éliminé de la première portion extérieure.

4. Système de circulation de fluide selon la revendication 3, dans lequel l'au moins un aimant permanent a ses pôles Nord et Sud recouverts d'une couche de matériau ferromagnétique (39).

5. Système de circulation de fluide selon l'une des revendications 3 à 4, dans lequel l'au moins un aimant permanent et le manchon sensiblement tubulaire sont conçus pour être mobiles l'un par rapport à l'autre.

6. Système de circulation de fluide selon l'une des revendications 1 à 5, dans lequel le manchon sensiblement tubulaire présente, au niveau d'une portion coïncidant avec la deuxième position, un diamètre agrandi par rapport au reste du manchon sensiblement tubulaire.

7. Système de circulation de fluide selon la revendication 6, dans lequel la portion coïncidant avec la deuxième position présente une forme conique ayant un diamètre augmentant progressivement.

8. Système de circulation de fluide selon la revendication 7, dans lequel l'au moins un aimant permanent peut être positionné dans une troisième position au-delà de l'extrémité de la forme conique présentant le diamètre le plus importante.

9. Système de circulation de fluide selon l'une des revendications 1 à 8, dans lequel l'au moins un aimant permanent peut être positionné dans la première position pour la collecte des particules suspendues ayant des propriétés ferromagnétiques et dans la deuxième position permettant la libération desdites particules.

10. Système de circulation de fluide selon l'une des revendications 2 à 9, dans lequel l'au moins un aimant permanent est conçu pour être déplacé par un élément flexible (19, 119, 219), tel qu'un câble, sur lequel est appliquée une force de traction.

11. Système de circulation de fluide selon l'une des revendications 3 à 10, dans lequel l'au moins un aimant permanent est précontraint par un ressort vers une des première et deuxième positions.

12. Système de circulation de fluide selon l'une des revendications 1 à 11, dans lequel le système de circulation de fluide est un système de chauffage et/ou un système de refroidissement.

13. Procédé de séparation de particules suspendues ayant des propriétés ferromagnétiques d'un fluide circulant entre des échangeurs thermiques dans un système de circulation de fluide à l'aide d'un séparateur magnétique (1, 101, 201), ce procédé comprenant :
la fourniture d'une chambre de collecte (3, 103, 203) comprenant une entrée (5, 105, 205) pour la réception d'un écoulement de fluide susceptible de contenir des particules suspendues ayant des propriétés ferromagnétiques, et une sortie (7, 107, 207) permettant au fluide de s'écouler hors de la chambre de collecte, un trajet d'écoulement de fluide étant défini entre l'entrée et la sortie, et comprenant un intérieur (9, 109, 209) de la chambre de collecte ;
la fourniture d'un manchon sensiblement tubulaire (11, 111, 211) positionné dans le trajet d'écoulement de fluide à l'intérieur de la chambre de collecte, le manchon sensiblement tubulaire comprenant un intérieur étanche au fluide (12, 112, 212) ;
la fourniture d'un dispositif à aimant (13, 113, 213) logé dans l'intérieur étanche au fluide du manchon sensiblement tubulaire pour créer un champ magnétique sur au moins une première portion extérieure du manchon sensiblement tubulaire ;
la fourniture d'un moyen pour l'élimination sélective du champ magnétique sur la première portion extérieure, **caractérisé en ce que**
le moyen pour l'élimination sélective du champ magnétique comprenant un manchon auxiliaire (15, 115, 215) constitué d'un matériau ferromagnétique ; et
ce procédé comprenant le positionnement sélectif du dispositif à aimant et du manchon auxiliaire dans une première position relative dans laquelle le champ magnétique est généré au niveau de la première portion extérieure pour la collecte des particules suspendues ayant des propriétés ferromagnétiques et une deuxième position relative dans laquelle le champ magnétique est éliminé de la première portion extérieure pour la libération desdites particules.

14. Procédé selon la revendication 13, dans lequel, dans la deuxième position relative, le manchon auxiliaire (15, 115, 215) est positionné autour du dispositif à aimant pour court-circuiter le champ magnétique.

15. Procédé selon la revendication 13 ou 14, comprenant le déplacement du dispositif à aimant (13, 113, 213) et/ou du manchon auxiliaire (15, 115, 215) entre la première et la deuxième positions relatives.

16. Procédé selon l'une des revendications 13 à 15, dans lequel la portion coïncidant avec la deuxième position présente une forme conique présentant un diamètre augmentant progressivement et comprenant le positionnement du dispositif à aimant dans une position au-delà de l'extrémité de la forme conique présentant le diamètre le plus important pour la recollecte desdites particules au niveau de la position au-delà de l'extrémité de la forme conique ayant le diamètre le plus important, puis le positionnement du dispositif à aimant dans la première ou la deuxième position relative permettant auxdites particules d'être libérées de façon à pouvoir être évacuées.
